# EUROPEAN PATENT APPLICATION

(11) **EP 4 294 109 A2**
(43) Date of publication of application: **20.12.2023**
(21) Application number: 23207256.1
(22) Date of filing: 16.07.2021
(51) Int. Cl.: H04W 74/08

(54) **UE REFERENCE TIMING FOR CFRA ON SERVING CELL**

(62) Divisional of application: 21912325.4
(71) Applicant: Apple Inc., Cupertino, CA 95014 (US)
(72) Inventor: CUI, Jie, Cupertino, 95014 (US); ZHANG, Dawei, Cupertino, 95014 (US); HE, Hong, Cupertino, 95014 (US); YAN, Hongbo, San Diego, 92131 (US); NIU, Huaning, Cupertino, 95014 (US); RAGHAVAN, Manasa, Cupertino, 95014 (US); LI, Qiming, Beijing, 100022 (CN); CUI, Shengshan, San Diego (US); CHEN, Xiang, Cupertino, 95014 (US); TANG, Yang, Cupertino, 95014 (US)
(74) Representative: COPA Copenhagen Patents

(57) **Abstract**

Systems and methods for determining a timing of a random access channel (RACH) occasion (RO) used to transmit a contention free random access (CFRA) preamble triggered by the receipt of an physical downlink control channel (PDCCH) order in a PDCCH are disclosed herein. A user equipment (UE) receives the PDCCH order and determines a timing offset value between the RO and a signal (e.g., a synchronization signal block (SSB), the PDCCH, a reference signal indicated in an active transmission configuration indicator (TCI), etc.) to be used as a timing source. The UE also determines the arrival time of the signal to be used at the timing source. The UE then determines a time of the RO (during which the CFRA preamble will be transmitted) according to the arrival time and the timing offset value. Timing advance (TA) value(s) may also be accounted for as part of such a determination.

## Description

### TECHNICAL FIELD

This application relates generally to wireless communication systems, including wireless communication systems using contention free random access (CFRA).

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a or g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

Frequency bands for 5G NR may be separated into two or more different frequency ranges. For example, Frequency Range 1 (FR1) may include frequency bands operating in sub-6 GHz frequencies, some of which are bands that may be used by previous standards, and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1. Skilled persons will recognize these frequency ranges, which are provided by way of example, may change from time to time or from region to region.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a method of a UE for performing a transmission of a CFRA preamble, according to an embodiment.
FIG. 2 illustrates a method of a UE for performing a transmission of a CFRA preamble, according to an embodiment.
FIG. 3 illustrates a method of a UE for performing a transmission of a CFRA preamble, according to an embodiment.
FIG. 4 illustrates a method of a UE for performing a transmission of a CFRA preamble, according to an embodiment.
FIG. 5 illustrates a method of a UE for performing a transmission of a CFRA preamble, according to an embodiment.
FIG. 6 illustrates an example architecture of a wireless communication system, according to embodiments disclosed herein.
FIG. 7 illustrates a system for performing signaling between a wireless device and a network device, according to embodiments disclosed herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

As contemplated by the 3GPP, a user equipment (UE) may use different methods to track the current downlink (DL) timing and/or frequency used by the serving cell. For example, an active tracking reference signal (TRS) may be used by the UE to assist in time and frequency tracking. Alternatively, a physical downlink shared channel (PDSCH) demodulation reference signal (DMRS) that is used for channel estimation and coherent demodulation can be used by the UE to assist the device in time and frequency tracking. In these instances, if the TRS is switched or the PDSCH DMRS is changed, the UE may update the timing and frequency tracking source.

However, in, for example, a case where a physical downlink control channel (PDCCH) order is used to trigger the use of contention free random access (CFRA) on a serving cell, the timing source that would be used by the UE may be unclear. For example, it may be that a location (in terms of slots and/or symbols used by the wireless communication system) of a random access channel (RACH) occasion (RO) to be used to transmit the CFRA preamble may be determined (according to, e.g., a synchronization signal block (SSB) associated with the CFRA preamble that is indicated in the PDCCH order). However, there may be no set manner of determining a particular timing source available to the UE against which to measure for the location of that RO, meaning that overall UE behavior as far as measuring for the RO for transmitting the CFRA preamble is in at least this regard undefined.

Various embodiments for selecting and using a timing source against which to measure for an RO for transmitting a CFRA preamble are described herein. The use of one or more of these embodiments (e.g., by different UE of different vendors) may promote consistency and reproducibility in the particular manner in which an RO is measured for as between the various UE.

In an embodiment, a UE may use a downlink timing of an SSB indicated in a PDCCH order that triggers a transmission of the CFRA preamble as a timing source. In such cases, a timing of the CFRA preamble transmission may be determined relative to an arrival time of the SSB so indicated.

For example, after receiving the PDCCH order, the UE may determine a timing offset value for an RO for the associated transmission of the CFRA preamble relative to the indicated SSB. This timing offset value may be, for example, a duration associated with a symbol and/or slot offset between the SSB and the RO. The timing offset value may be determined by the UE according to a network configuration that informs the UE of an amount of time between the indicated SSB and the RO.

Then, attendant to a receipt of the indicated SSB, the UE may determine an arrival time of the SSB. The UE may determine the arrival time of the SSB in various ways. In a first embodiment, the arrival time of the SSB may be deemed to be the time of a first path arrival of the SSB as detected by the UE. As used herein a "first path arrival" of a signal may refer to the first detection of that signal according to an associated path at the detecting device. In other embodiments, the arrival time of the SSB may be deemed to be the time of the strongest path arrival of the SSB as detected by the UE. As used herein, a "strongest path arrival" of a signal may refer to the strongest detection of that signal as detected at the detecting device according to an associated path for that signal (relative to other detections of that signal according to associated paths, assuming such exist).

The UE may then determine a time of the RO (at least in part) by adding the determined timing offset value to the arrival time of the SSB. In other words, the arrival time of the SSB may be used as the timing source against which the location of the RO is measured for. The UE may then transmit the CFRA preamble during the RO according to this measurement.

It is contemplated that in at least some embodiments, in addition to adding the determined timing offset value to the arrival time of the SSB, the time of the RO may be determined by (further) accounting for timing advance (TA) aspects. The purpose of accounting for TA aspects may be to compensate for, for example, the signaling travel time between the UE and the base station, such that absolute signaling alignment between the UE and the base station is promoted. Accordingly, in embodiments accounting for TA aspects, to determine the time of the RO, the UE may add the determined timing offset value to the arrival time of the SSB in the manner described, and then subtract one or more TA values that are (whether alone or together) configured to help account for the signaling travel time between the base station and the UE.

A first example of a TA value that may be so subtracted may be a value that is or has been received at the UE from the base station in a TA command. If the use of such a TA command is not configured as between the UE and the base station, this value may be zero.

A second example of a TA value that may be so subtracted may be a value that is based on a spectrum usage mode between the UE and the base station. For example, if the spectrum usage mode between the UE and the base station is a time division duplex (TDD) mode, then a first TA value may be subtracted as described. On the other hand, if the spectrum usage mode between the UE and the base station is a frequency division duplex (FDD) mode, then a second TA value (that may be different from the first TA value associated with the TDD mode) may be subtracted as described. It is contemplated that in some cases, such TA value(s) used according to a spectrum usage mode may be predetermined according to, for example, a standard that generally defines communications within the wireless communication system between the UE and the base station.

In various embodiments subtracting TA value(s) as described, the subtraction of a TA value received in a TA command (as in the first example above) may be performed, the subtraction of a TA value according to a spectrum usage mode (as in the second example above) may be performed, or each of a subtraction of a TA value received in a TA command and a subtraction of a TA value according to a spectrum usage mode may be performed.

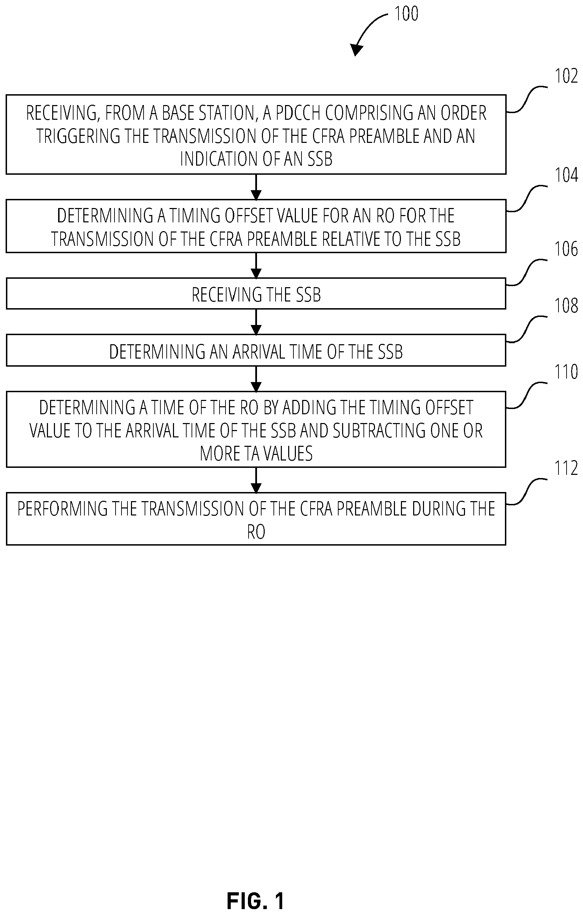

FIG. 1 illustrates a method 100 of a UE for performing a transmission of a CFRA preamble, according to an embodiment. The method 100 includes receiving 102, from a base station, a PDCCH comprising an order triggering the transmission of the CFRA preamble and an indication of a SSB.

The method 100 further includes determining 104, a timing offset value for an RO for the transmission of the CFRA preamble relative to the SSB.

The method 100 further includes receiving 106 the SSB.

The method 100 further includes determining 108 an arrival time of the SSB.

The method 100 further includes determining 110 a time of the RO by adding the timing offset value to the arrival time of the SSB and subtracting one or more TA values.

The method 100 further includes performing 112 the transmission of the CFRA preamble during the RO.

In some embodiments of the method 100, the arrival time of the SSB is determined according to a first path arrival timing detected by the UE for the SSB.

In some embodiments of the method 100, the arrival time of the SSB is determined according to a strongest path arrival time detected by the UE for the SSB.

In some embodiments of the method 100, the one or more TA values comprises a value that is based on a spectrum usage mode between the UE and the base station.

Embodiments contemplated herein include an apparatus comprising means to perform one or more elements of the method 100. This apparatus may be, for example, an apparatus of a UE (such as a wireless device 702 that is a UE, as described herein).

Embodiments contemplated herein include an apparatus comprising means to perform one or more elements of the method 100. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 100. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 100. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 100. This apparatus may be, for example, an apparatus of a UE (such as a wireless device 702 that is a UE, as described herein).

Embodiments contemplated herein include a signal as described in or related to one or more elements of the method 100.

Embodiments contemplated herein include a computer program or computer program product comprising instructions, wherein execution of the program by a processor is to cause the processor to carry out one or more elements of the method 100. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

In an embodiment, a UE may use a downlink timing of a reference signal that is quasi-colocated (QCLed) with an SSB indicated in a PDCCH order that triggers a transmission of the CFRA preamble as a timing source. In such cases, a timing of the CFRA preamble transmission may be determined relative to an arrival time of such a reference signal. This embodiment may be used in cases involving FR2 where the SSB indicated in a PDCCH order is received at the UE on a "rough" beam (and therefore may itself have a relatively more imprecise overall timing from the UE perspective as compared to the QCLed reference signals, which may be sent instead on "fine" beams).

After receiving the PDCCH order, the UE may determine a timing offset value for an RO for the associated transmission of the CFRA preamble relative to the reference signal that is QCLed with the indicated SSB. This timing offset value may be, for example, a duration associated with a symbol and/or slot offset between the reference signal and the RO. The timing offset value may be determined indirectly. For example, the UE may be aware of an amount of time between the QCLed reference signal and the SSB indicated in the PDCCH order according to a first network configuration, and may be aware of an amount of time between the SSB indicated in the PDCCH order and the RO according to a second network configuration. By adding these two amounts of time together, the UE can arrive at the timing offset value.

Then, attendant to a receipt of the reference signal, the UE may determine an arrival time of the reference signal. The UE may determine the arrival time of the reference signal that is QCLed with the indicated SSB that in various ways. In a first embodiment, the arrival time of the reference signal may be deemed to be the time of a first path arrival of the reference signal as detected by the UE. In other embodiments, the arrival time of the reference signal may be deemed to be the time of the strongest path arrival of the reference signal as detected by the UE.

The UE may then determine a time of the RO (at least in part) by adding the determined timing offset value to the arrival time of the reference signal that is QCLed with the SSB. In other words, the arrival time of the reference signal that is QCLed with the SSB may be used as the timing source against which the location of the RO is measured for. The UE may then transmit the CFRA preamble during the RO according to this measurement.

Examples of reference signals that may be QCLed with the indicated SSB and that may be used as a timing source may include tracking reference signals (TRS), DMRS, and channel state information reference signals (CSI-RS), among other possibilities. Further, it is contemplated that such signals may be QCLed with the SSB according to any of QCL Type A, QCL Type B, QCL Type D, and/or QCL Type D (where it should be understood that QCL Type D may only apply in the case of FR2 operation).

It is contemplated that in at least some embodiments, in addition adding the determined timing offset value to the arrival time of the reference signal that is QCLed with the SSB, the time of the RO may be determined by (further) accounting for timing advance (TA) aspects. Accordingly, in embodiments accounting for TA aspects, to determine the time of the RO, the UE may add the determined timing offset value to the arrival time of the reference signal in the manner described, and then subtract one or more TA values that are (whether alone or together) configured to help account for the signaling travel time between the base station and the UE.

A first example of a TA value that may be so subtracted may be a value that is or has been received at the UE from the base station in a TA command (e.g., in the manner that was described in relation to FIG. 1). A second example of a TA value that may be so subtracted may be a value that is based on a spectrum usage mode between the UE and the base station (e.g., in the manner that was previously described in relation to FIG. 1). In various embodiments subtracting TA value(s), the subtraction of a TA value received in a TA command may be performed, the subtraction of a TA value according to a spectrum usage mode may be performed, or each of a subtraction of a TA value received in a TA command and a subtraction of a TA value according to a spectrum usage mode may be performed.

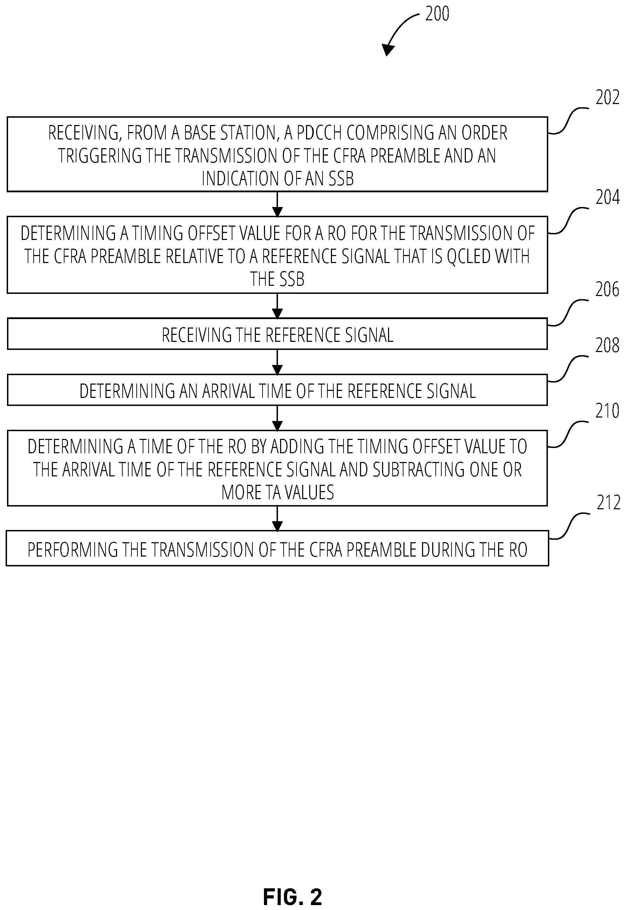

FIG. 2 illustrates a method 200 of a UE for performing a transmission of a CFRA preamble, according to an embodiment. The method 200 includes receiving 202, from a base station, a PDCCH comprising an order triggering the transmission of the CFRA preamble and an indication of a SSB.

The method 200 further includes determining 204 a timing offset value for an RO for the transmission of the CFRA preamble relative to a reference signal that is QCLed with the SSB.

The method 200 further includes receiving 206 the reference signal.

The method 200 further includes determining 208 an arrival time of the reference signal.

The method 200 further includes determining 210 a time of the RO by adding the timing offset value to the arrival time of the reference signal and subtracting one or more TA values.

The method 200 further includes performing 212 the transmission of the CFRA preamble during the RO.

In some embodiments of method 200, the arrival time of the reference signal is determined according to a first path arrival timing detected by the UE for the reference signal.

In some embodiments of method 200, the arrival time of the reference signal is determined according to a strongest path arrival time detected by the UE for the reference signal.

In some embodiments of method 200, the reference signal comprises one of a TRS, a DMRS, and a CSI-RS.

In some embodiments of method 200, the one or more TA values comprises a value received in a TA command from the base station.

In some embodiments of method 200, the one or more TA values comprises a value that is based on a spectrum usage mode between the UE and the base station.

Embodiments contemplated herein include an apparatus comprising means to perform one or more elements of the method 200. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 200. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 200. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 200. This apparatus may be, for example, an apparatus of a UE (such as a wireless device 702 that is a UE, as described herein).

Embodiments contemplated herein include a signal as described in or related to one or more elements of the method 200.

Embodiments contemplated herein include a computer program or computer program product comprising instructions, wherein execution of the program by a processor is to cause the processor to carry out one or more elements of the method 200. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

In an embodiment, a UE may use a downlink timing of the PDCCH carrying the PDCCH order that triggers a transmission of the CFRA preamble as a timing source. In such cases, a timing of the CFRA preamble transmission may be determined relative to an arrival time of such a PDCCH.

For example, after receiving the PDCCH order, the UE may determine a timing offset value for an RO for the associated transmission of the CFRA preamble relative to PDCCH carrying the PDCCH order. This timing offset value may be, for example, a duration associated with a symbol and/or slot offset between the arrival time of the PDCCH and the RO. The arrival time of the PDCCH may be understood at the UE according to, for example, a timing used at the UE to receive the PDCCH.

The UE may then determine a time of the RO (at least in part) by adding the determined timing offset value to the arrival time of the PDCCH. In other words, the arrival time of the PDCCH may be used as the timing source against which the location of the RO is measured for. The UE may then transmit the CFRA preamble during the RO according to this measurement.

It is contemplated that in at least some embodiments, in addition to adding the determined timing offset value to the arrival time of the PDCCH, the time of the RO may be determined by (further) accounting for timing advance (TA) aspects. Accordingly, in embodiments accounting for TA aspects, to determine the time of the RO, the UE may add the determined timing offset value to the arrival time of the PDCCH in the manner described, and then subtract one or more TA values that are (whether alone or together) configured to help account for the signaling travel time between the base station and the UE.

A first example of a TA value that may be so subtracted may be a value that is or has been received at the UE from the base station in a TA command (e.g., in the manner that was described in relation to FIG. 1). A second example of a TA value that may be so subtracted may be a value that is based on a spectrum usage mode between the UE and the base station (e.g., in the manner that was previously described in relation to FIG. 1). In various embodiments subtracting TA value(s), the subtraction of a TA value received in a TA command may be performed, the subtraction of a TA value according to a spectrum usage mode may be performed, or each of a subtraction of a TA value received in a TA command and a subtraction of a TA value according to a spectrum usage mode may be performed.

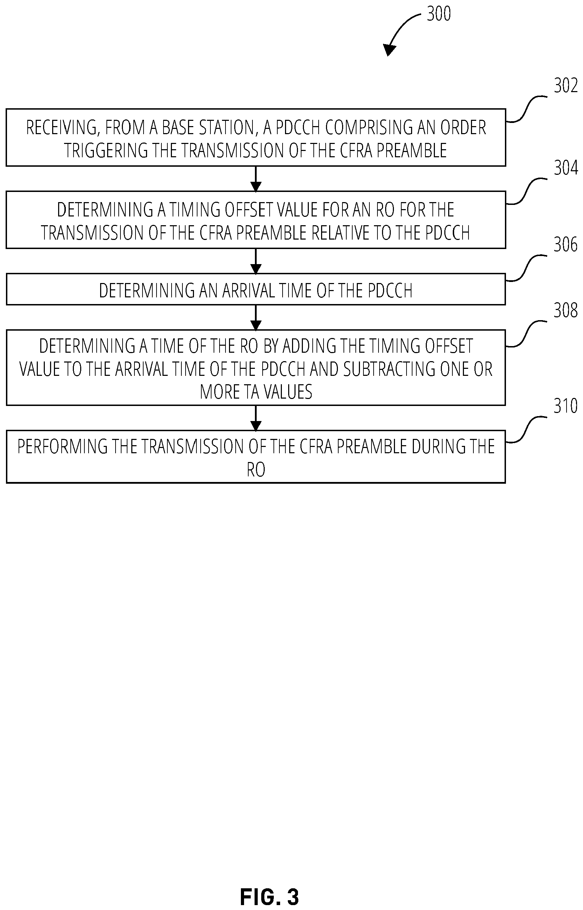

FIG. 3 illustrates a method 300 of a UE for performing a transmission of a CFRA preamble, according to an embodiment. The method 300 includes receiving 302, from a base station, a PDCCH comprising an order triggering the transmission of the CFRA preamble.

The method 300 further includes determining 304 a timing offset value for an RO for the transmission of the CFRA preamble relative to the PDCCH.

The method 300 further includes determining 306 an arrival time of the PDCCH.

The method 300 further includes determining 308 a time of the RO by adding the timing offset value to the arrival time of the PDCCH and subtracting one or more TA values.

The method further includes performing 310 the transmission of the CFRA preamble during the RO.

In some embodiments of the method 300, the arrival time of the PDCCH is determined according to a timing used at the UE to receive the PDCCH.

In some embodiments of the method 300 the one or more TA values comprises a value received in a TA command from the base station.

In some embodiments of the method 300 the one or more TA values comprises a value that is based on a spectrum usage mode between the UE and the base station.

Embodiments contemplated herein include an apparatus comprising means to perform one or more elements of the method 300. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 300. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 300. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 300. This apparatus may be, for example, an apparatus of a UE (such as a wireless device 702 that is a UE, as described herein).

Embodiments contemplated herein include a signal as described in or related to one or more elements of the method 300.

Embodiments contemplated herein include a computer program or computer program product comprising instructions, wherein execution of the program by a processor is to cause the processor to carry out one or more elements of the method 300. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

In an embodiment, a UE may use a downlink timing of a reference signal indicated in an active transmission configuration indicator (TCI) of a PDCCH or a PDSCH of a current serving cell of the UE as a timing source. In such cases, a timing of the CFRA preamble transmission may be determined relative to an arrival time of such a reference signal. In these embodiments, the use of the reference signals indicated in the active TCI of the PDCCH or PDSCH of the current serving cell of the UE as a timing source may occur regardless of any SSB indicated in the PDCCH order.

After receiving a PDCCH order, the UE may determine a timing offset value for an RO for the associated transmission of the CFRA preamble relative to a reference signal that is indicated in in an active TCI of a PDCCH or PDSCH of the current serving cell of the UE. This timing offset value may be, for example, a duration associated with a symbol and/or slot offset between the reference signal and the RO. The timing offset value may be determined indirectly. For example, the UE may be aware of an amount of time between the reference signal indicated in the active TCI and an SSB indicated in the PDCCH order according to a first network configuration, and may be aware of an amount of time between the SSB indicated in the PDCCH order and the RO according to a second network configuration. By taking the difference of these two values, the UE can arrive at the timing offset value.

Then, attendant to a receipt of the reference signal, the UE may determine an arrival time of the reference signal. The UE may determine the arrival time of the reference signal that is indicated in in the active TCI of the PDCCH or PDSCH of the current serving cell of the UE in various ways. In a first embodiment, the arrival time of the reference signal may be deemed to be the time of a first path arrival of the reference signal as detected by the UE. In other embodiments, the arrival time of the reference signal may be deemed to be the time of the strongest path arrival of the reference signal as detected by the UE.

The UE may then determine a time of the RO (at least in part) by adding the determined timing offset value to the arrival time of the reference signal that is indicated in the active TCI of the PDCCH or PDSCH of the current serving cell of the UE. In other words, the arrival time of the reference signal that is indicated in the active TCI of the PDCCH or PDSCH of the current serving cell of the UE may be used as the timing source against which the location of the RO is measured for. The UE may then transmit the CFRA preamble during the RO according to this measurement.

Examples of reference signals that may be indicated in the active TCI of the PDCCH or PDSCH of the current serving cell of the UE and that may be used as a timing source may include TRS, among other possibilities. In some cases, the TRS may be a currently active TRS. Further, it is contemplated that the TCI could contain any of QCL Type A, QCL Type B, QCL Type D, and/or QCL Type D (where it should be understood that QCL Type D may only apply in the case of FR2 operation).

It is contemplated that in at least some embodiments, in addition adding the determined timing offset value to the arrival time of the reference signal that is indicated in in the active TCI of the PDCCH or PDSCH of the current serving cell of the UE, the time of the RO may be determined by (further) accounting for timing advance (TA) aspects. Accordingly, in embodiments accounting for TA aspects, to determine the time of the RO, the UE may add the determined timing offset value to the arrival time of the reference signal in the manner described, and then subtract one or more TA values that are (whether alone or together) configured to help account for the signaling travel time between the base station and the UE.

A first example of a TA value that may be so subtracted may be a value that is or has been received at the UE from the base station in a TA command (e.g., in the manner that was described in relation to FIG. 1). A second example of a TA value that may be so subtracted may be a value that is based on a spectrum usage mode between the UE and the base station (e.g., in the manner that was previously described in relation to FIG. 1). In various embodiments subtracting TA value(s), the subtraction of a TA value received in a TA command may be performed, the subtraction of a TA value according to a spectrum usage mode may be performed, or each of a subtraction of a TA value received in a TA command and a subtraction of a TA value according to a spectrum usage mode may be performed.

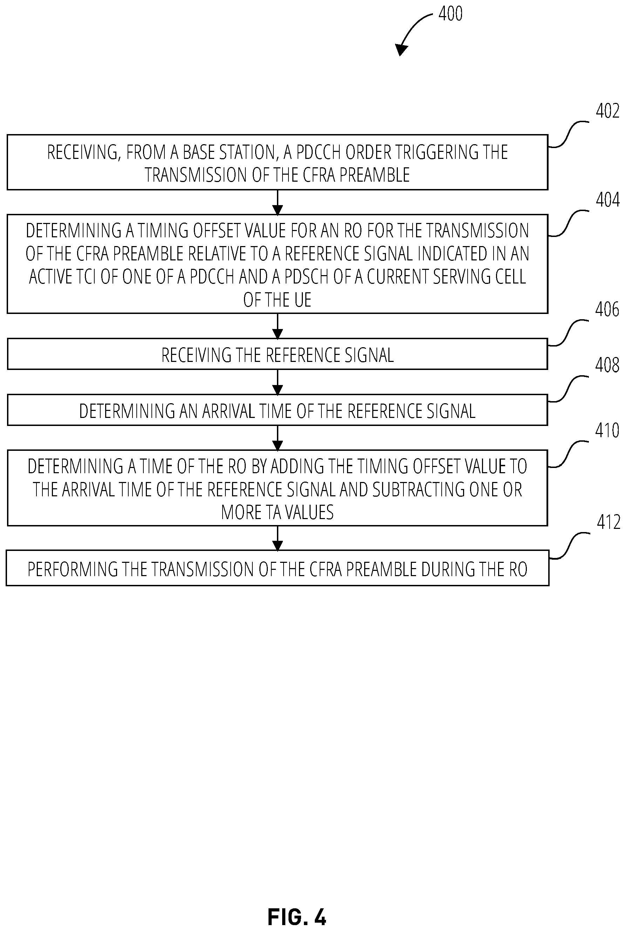

FIG. 4 illustrates a method 400 of a UE for performing a transmission of a CFRA preamble, according to an embodiment. The method 400 includes receiving 402, from a base station, a PDCCH order triggering the transmission of the CFRA preamble.

The method 400 further includes determining 404 a timing offset value for an RO for the transmission of the CFRA preamble relative to a reference signal indicated in an active TCI of one of a PDCCH and a PDSCH of a current serving cell of the UE.

The method 400 further includes receiving 406 the reference signal.

The method 400 further includes determining 408 an arrival time of the reference signal.

The method 400 further include determining 410 a time of the RO by adding the timing offset value to the arrival time of the reference signal and subtracting one or more TA values.

The method 400 further includes performing 412 the transmission of the CFRA preamble during the RO.

In some embodiments of the method 400, the reference signal comprises a TRS.

In some embodiments of the method 400, the arrival time of the reference signal is determined according to a first path arrival timing detected by the UE for the reference signal.

In some embodiments of the method 400, the arrival time of the reference signal is determined according to a strongest path arrival time detected by the UE for the reference signal.

In some embodiments of the method 400, the one or more TA values comprises a value received in a TA command from the base station.

In some embodiments of the method 400, the one or more TA values comprises a value that is based on a spectrum usage mode between the UE and the base station.

Embodiments contemplated herein include an apparatus comprising means to perform one or more elements of the method 400. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 400. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 400. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 400. This apparatus may be, for example, an apparatus of a UE (such as a wireless device 702 that is a UE, as described herein).

Embodiments contemplated herein include a signal as described in or related to one or more elements of the method 400.

Embodiments contemplated herein include a computer program or computer program product comprising instructions, wherein execution of the program by a processor is to cause the processor to carry out one or more elements of the method 400. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

In an embodiment, a UE may use a downlink timing of one of an SSB and a CSI-RS as a timing source. In such cases, a timing of the CFRA preamble transmission may be determined relative to an arrival time of the one of the SSB and the CSI-RS. The use of the one of the SSB and the CSI-RS in this manner may be used in cases where a UE is not, for example, actively monitoring for a PDCCH and/or a PDSCH.

It may be that the one of the SSB and the CSI-RS is a signal that is used for either L1 or L3 measurement of the cell. In such cases, the one of the SSB and the CSI-RS may be selected for use as a timing source because it corresponds to the strongest signal for L1 or L3 measurement of the cell out of a plurality of such signals. Alternatively, and in the SSB case, it may be that the SSB is a signal that is used for cell identification. In such cases, the SSB may be selected for use as a timing source because it corresponds to the strongest signal identifying the cell out of a plurality of such signals. In these embodiments, the use of the one of an SSB and a CSI-RS as a timing source may occur regardless of any SSB indicated in the PDCCH order. These described uses of the one of the SSB and the CSI-RS may be in the context of preparation for a (potential) cell access by the UE of the cell of the one of the SSB and the CSI-RS.

After receiving a PDCCH order, the UE may determine a timing offset value for an RO for the associated transmission of the CFRA preamble relative to the one of the SSB and the CSI-RS. This timing offset value may be, for example, a duration associated with a symbol and/or slot offset between the one of the SSB and the CSI-RS and the RO. The timing offset value may be determined indirectly. For example, the UE may be aware of an amount of time between an SSB indicated in the PDCCH order and the RO according to a network configuration that informs the UE of an amount of time between the indicated SSB and the RO. The UE may also be aware of an amount of time between a cell access SSB (e.g., that either is or is associated with the one of the SSB and the CSI-RS that is used as a timing source) and the SSB indicated in the PDCCH order (and it is anticipated that in some instances, the cell access SSB and the SSB indicated in the PDCCH order may be the same, in which case this amount may be zero). Then, by adding these two amounts of time together, the UE can arrive at the timing offset value.

Then, attendant to receiving the one of the SSB and the CSI-RS, the UE may determine an arrival time of the one of the SSB and the CSI-RS. The UE may determine the arrival time of the one of the SSB and the CSI-RS in various ways. In a first embodiment, the arrival time of the one of the SSB and the CSI-RS may be deemed to be the time of a first path arrival of the one of the SSB and the CSI-RS as detected by the UE. In other embodiments, the arrival time of the one of the SSB and the CSI-RS may be deemed to be the time of the strongest path arrival of the one of the SSB and the CSI-RS as detected by the UE.

The UE may then determine a time of the RO (at least in part) by adding the determined timing offset value to the arrival time of the one of the SSB and the CSI-RS. In other words, the arrival time of the one of the SSB and the CSI-RS may be used as the timing source against which the location of the RO is measured for. The UE may then transmit the CFRA preamble during the RO according to this measurement.

It is contemplated that in at least some embodiments, in addition adding the determined timing offset value to the arrival time of the one of the SSB and the CSI-RS, the time of the RO may be determined by (further) accounting for timing advance (TA) aspects. Accordingly, in embodiments accounting for TA aspects, to determine the time of the RO, the UE may add the determined timing offset value to the arrival time of the one of the SSB and the CSI-RS in the manner described, and then subtract one or more TA values that are (whether alone or together) configured to help account for the signaling travel time between the base station and the UE.

A first example of a TA value that may be so subtracted may be a value that is or has been received at the UE from the base station in a TA command (e.g., in the manner that was described in relation to FIG. 1). A second example of a TA value that may be so subtracted may be a value that is based on a spectrum usage mode between the UE and the base station (e.g., in the manner that was previously described in relation to FIG. 1). In various embodiments subtracting TA value(s), the subtraction of a TA value received in a TA command may be performed, the subtraction of a TA value according to a spectrum usage mode may be performed, or each of a subtraction of a TA value received in a TA command and a subtraction of a TA value according to a spectrum usage mode may be performed.

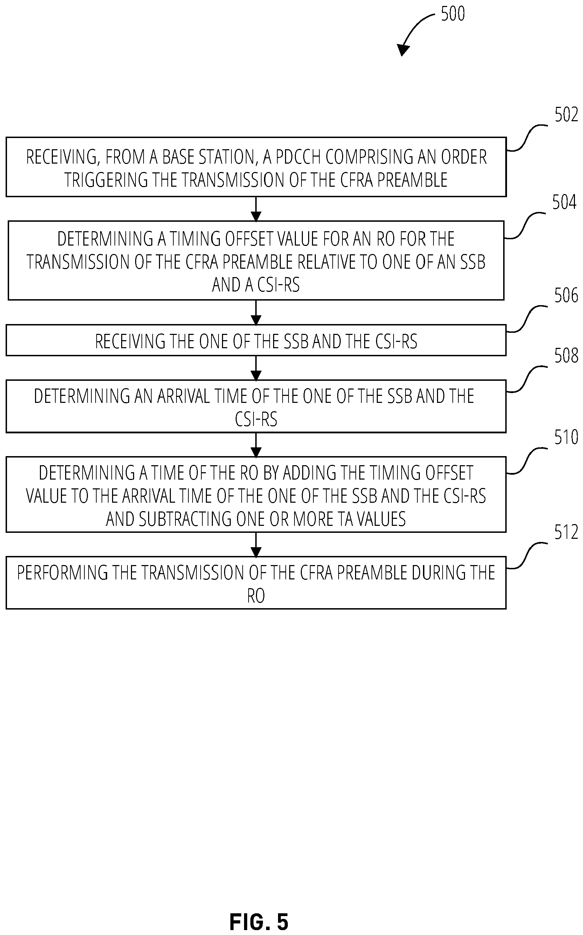

FIG. 5 illustrates a method 500 of a UE for performing a transmission of a CFRA preamble, according to an embodiment. The method 500 includes receiving 502, from a base station, a PDCCH comprising an order triggering the transmission of the CFRA preamble.

The method 500 further includes determining 504 a timing offset value for an RO for the transmission of the CFRA preamble relative to one of an SSB and a CSI-RS.

The method 500 further includes receiving 506 the one of the SSB and the CSI-RS.

The method 500 further includes determining 508 an arrival time of the one of the SSB and the CSI-RS.

The method 500 further includes determining 510 a time of the RO by adding the timing offset value to the arrival time of the one of the SSB and the CSI-RS and subtracting one or more TA values.

The method 500 further includes performing 512 the transmission of the CFRA preamble during the RO.

In some embodiments of the method 500, the arrival time of the one of the SSB and the CSI-RS is determined according to a first path arrival timing detected by the UE for the one of the SSB and the CSI-RS.

In some embodiments of the method 500, the arrival time of the one of the SSB and the CSI-RS is determined according to a strongest path arrival time detected by the UE for the one of the SSB and the CSI-RS.

In some embodiments of the method 500, the one of the SSB and the CSI-RS comprises an SSB that is used for cell measurement preparatory to a cell access.

In some embodiments of the method 500, the one of the SSB and the CSI-RS comprises a CSI-RS that is used for cell measurement preparatory to a cell access.

In some embodiments of the method 500, the one of the SSB and the CSI-RS comprises an SSB that is used for cell identification preparatory to a cell access.

In some embodiments of the method 500, the one or more TA values comprises a value received in a TA command from the base station.

In some embodiments of the method 500, the one or more TA values comprises a value that is based on a spectrum usage mode between the UE and the base station.

Embodiments contemplated herein include an apparatus comprising means to perform one or more elements of the method 500. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 500. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 500. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 500. This apparatus may be, for example, an apparatus of a UE (such as a wireless device 702 that is a UE, as described herein).

Embodiments contemplated herein include a signal as described in or related to one or more elements of the method 500.

Embodiments contemplated herein include a computer program or computer program product comprising instructions, wherein execution of the program by a processor is to cause the processor to carry out one or more elements of the method 500. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

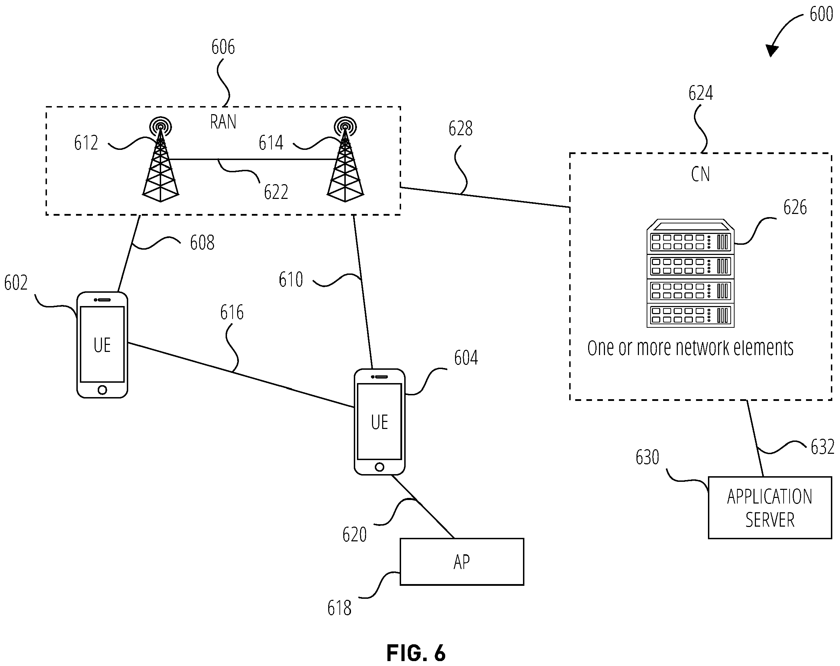

FIG. 6 illustrates an example architecture of a wireless communication system 600, according to embodiments disclosed herein. The following description is provided for an example wireless communication system 600 that operates in conjunction with the LTE system standards and/or 5G or NR system standards as provided by 3GPP technical specifications.

As shown by FIG. 6, the wireless communication system 600 includes UE 602 and UE 604 (although any number of UEs may be used). In this example, the UE 602 and the UE 604 are illustrated as smartphones (e.g., handheld touchscreen mobile computing devices connectable to one or more cellular networks), but may also comprise any mobile or non-mobile computing device configured for wireless communication.

The UE 602 and UE 604 may be configured to communicatively couple with a RAN 606. In embodiments, the RAN 606 may be NG-RAN, E-UTRAN, etc. The UE 602 and UE 604 utilize connections (or channels) (shown as connection 608 and connection 610, respectively) with the RAN 606, each of which comprises a physical communications interface. The RAN 606 can include one or more base stations, such as base station 612 and base station 614, that enable the connection 608 and connection 610.

In this example, the connection 608 and connection 610 are air interfaces to enable such communicative coupling, and may be consistent with RAT(s) used by the RAN 606, such as, for example, an LTE and/or NR.

In some embodiments, the UE 602 and UE 604 may also directly exchange communication data via a sidelink interface 616. The UE 604 is shown to be configured to access an access point (shown as AP 618) via connection 620. By way of example, the connection 620 can comprise a local wireless connection, such as a connection consistent with any IEEE 802.11 protocol, wherein the AP 618 may comprise a Wi-Fi^{®} router. In this example, the AP 618 may be connected to another network (for example, the Internet) without going through a CN 624.

In embodiments, the UE 602 and UE 604 can be configured to communicate using orthogonal frequency division multiplexing (OFDM) communication signals with each other or with the base station 612 and/or the base station 614 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 612 or base station 614 may be implemented as one or more software entities running on server computers as part of a virtual network. In addition, or in other embodiments, the base station 612 or base station 614 may be configured to communicate with one another via interface 622. In embodiments where the wireless communication system 600 is an LTE system (e.g., when the CN 624 is an EPC), the interface 622 may be an X2 interface. The X2 interface may be defined between two or more base stations (e.g., two or more eNBs and the like) that connect to an EPC, and/or between two eNBs connecting to the EPC. In embodiments where the wireless communication system 600 is an NR system (e.g., when CN 624 is a 5GC), the interface 622 may be an Xn interface. The Xn interface is defined between two or more base stations (e.g., two or more gNBs and the like) that connect to 5GC, between a base station 612 (e.g., a gNB) connecting to 5GC and an eNB, and/or between two eNBs connecting to 5GC (e.g., CN 624).

The RAN 606 is shown to be communicatively coupled to the CN 624. The CN 624 may comprise one or more network elements 626, which are configured to offer various data and telecommunications services to customers/subscribers (e.g., users of UE 602 and UE 604) who are connected to the CN 624 via the RAN 606. The components of the CN 624 may be implemented in one physical device or separate physical devices including components to read and execute instructions from a machine-readable or computer-readable medium (e.g., a non-transitory machine-readable storage medium).

In embodiments, the CN 624 may be an EPC, and the RAN 606 may be connected with the CN 624 via an S1 interface 628. In embodiments, the S1 interface 628 may be split into two parts, an S 1 user plane (S 1-U) interface, which carries traffic data between the base station 612 or base station 614 and a serving gateway (S-GW), and the S1-MME interface, which is a signaling interface between the base station 612 or base station 614 and mobility management entities (MMEs).

In embodiments, the CN 624 may be a 5GC, and the RAN 606 may be connected with the CN 624 via an NG interface 628. In embodiments, the NG interface 628 may be split into two parts, an NG user plane (NG-U) interface, which carries traffic data between the base station 612 or base station 614 and a user plane function (UPF), and the S1 control plane (NG-C) interface, which is a signaling interface between the base station 612 or base station 614 and access and mobility management functions (AMFs).

Generally, an application server 630 may be an element offering applications that use internet protocol (IP) bearer resources with the CN 624 (e.g., packet switched data services). The application server 630 can also be configured to support one or more communication services (e.g., VoIP sessions, group communication sessions, etc.) for the UE 602 and UE 604 via the CN 624. The application server 630 may communicate with the CN 624 through an IP communications interface 632.

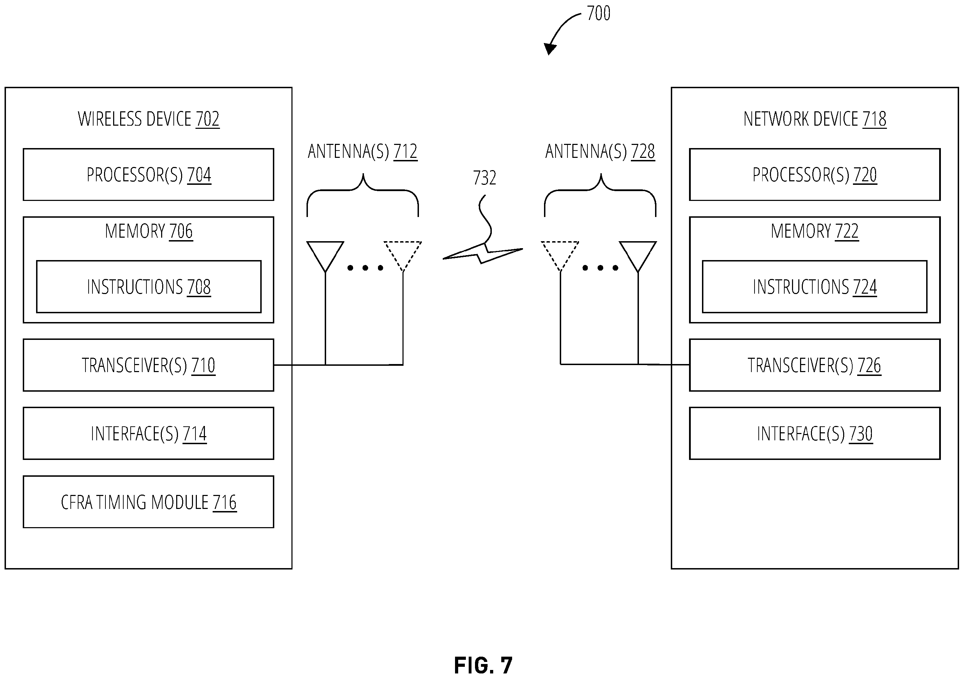

FIG. 7 illustrates a system 700 for performing signaling 732 between a wireless device 702 and a network device 718, according to embodiments disclosed herein. The system 700 may be a portion of a wireless communications system as herein described. The wireless device 702 may be, for example, a UE of a wireless communication system. The network device 718 may be, for example, a base station (e.g., an eNB or a gNB) of a wireless communication system.

The wireless device 702 may include one or more processor(s) 704. The processor(s) 704 may execute instructions such that various operations of the wireless device 702 are performed, as described herein. The processor(s) 704 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 702 may include a memory 706. The memory 706 may be a non-transitory computer-readable storage medium that stores instructions 708 (which may include, for example, the instructions being executed by the processor(s) 704). The instructions 708 may also be referred to as program code or a computer program. The memory 706 may also store data used by, and results computed by, the processor(s) 704.

The wireless device 702 may include one or more transceiver(s) 710 that may include radio frequency (RF) transmitter and/or receiver circuitry that use the antenna(s) 712 of the wireless device 702 to facilitate signaling (e.g., the signaling 732) to and/or from the wireless device 702 with other devices (e.g., the network device 718) according to corresponding RATs.

The wireless device 702 may include one or more antenna(s) 712 (e.g., one, two, four, or more). For embodiments with multiple antenna(s) 712, the wireless device 702 may leverage the spatial diversity of such multiple antenna(s) 712 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 702 may be accomplished according to precoding (or digital beamforming) that is applied at the wireless device 702 that multiplexes the data streams across the antenna(s) 712 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 702 may implement analog beamforming techniques, whereby phases of the signals sent by the antenna(s) 712 are relatively adjusted such that the (joint) transmission of the antenna(s) 712 can be directed (this is sometimes referred to as beam steering).

The wireless device 702 may include one or more interface(s) 714. The interface(s) 714 may be used to provide input to or output from the wireless device 702. For example, a wireless device 702 that is a UE may include interface(s) 714 such as microphones, speakers, a touchscreen, buttons, and the like in order to allow for input and/or output to the UE by a user of the UE. Other interfaces of such a UE may be made up of made up of transmitters, receivers, and other circuitry (e.g., other than the transceiver(s) 710/antenna(s) 712 already described) that allow for communication between the UE and other devices and may operate according to known protocols (e.g., Wi-Fi^{®}, Bluetooth^{®}, and the like).

The wireless device 702 may include a CFRA timing module 716. The CFRA timing module 716 may be implemented via hardware, software, or combinations thereof. For example, the CFRA timing module 716 may be implemented as a processor, circuit, and/or instructions 708 stored in the memory 706 and executed by the processor(s) 704. In some examples, the CFRA timing module 716 may be integrated within the processor(s) 704 and/or the transceiver(s) 710. For example, the CFRA timing module 716 may be implemented by a combination of software components (e.g., executed by a DSP or a general processor) and hardware components (e.g., logic gates and circuitry) within the processor(s) 704 or the transceiver(s) 710.

The CFRA timing module 716 may be used for various aspects of the present disclosure, for example, aspects of FIG. 1 through FIG. 5. For example, the CFRA timing module 716 may be configured to, among other things, determine a timing offset value, determine an arrival time of a signal (e.g., an SSB, a PDCCH, a reference signal, etc.) that is being used as a timing source, and/or determine a time of an RO based on the arrival time of the signal and the timing offset value, in the manner described herein.

The network device 718 may include one or more processor(s) 720. The processor(s) 720 may execute instructions such that various operations of the network device 718 are performed, as described herein. The processor(s) 704 may include one or more baseband processors implemented using, for example, a CPU, a DSP, an ASIC, a controller, an FPGA device, another hardware device, a firmware device, or any combination thereof configured to perform the operations described herein.

The network device 718 may include a memory 722. The memory 722 may be a non-transitory computer-readable storage medium that stores instructions 724 (which may include, for example, the instructions being executed by the processor(s) 720). The instructions 724 may also be referred to as program code or a computer program. The memory 722 may also store data used by, and results computed by, the processor(s) 720.

The network device 718 may include one or more transceiver(s) 726 that may include RF transmitter and/or receiver circuitry that use the antenna(s) 728 of the network device 718 to facilitate signaling (e.g., the signaling 732) to and/or from the network device 718 with other devices (e.g., the wireless device 702) according to corresponding RATs.

The network device 718 may include one or more antenna(s) 728 (e.g., one, two, four, or more). In embodiments having multiple antenna(s) 728, the network device 718 may perform MIMO, digital beamforming, analog beamforming, beam steering, etc., as has been described.

The network device 718 may include one or more interface(s) 730. The interface(s) 730 may be used to provide input to or output from the network device 718. For example, a network device 718 that is a base station may include interface(s) 730 made up of transmitters, receivers, and other circuitry (e.g., other than the transceiver(s) 726/antenna(s) 728 already described) that enables the base station to communicate with other equipment in a core network, and/or that enables the base station to communicate with external networks, computers, databases, and the like for purposes of operations, administration, and maintenance of the base station or other equipment operably connected thereto.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Exemplary embodiments of the present disclosure are set out in the following items:
1. A method of a user equipment (UE) for performing a transmission of a contention free random access (CFRA) preamble, comprising:
   receiving, from a base station, a physical downlink control channel (PDCCH) comprising an order triggering the transmission of the CFRA preamble and an indication of a synchronization signal block (SSB);
   determining a timing offset value for a random access channel (RACH) occasion (RO) for the transmission of the CFRA preamble relative to the SSB;
   receiving the SSB;
   determining an arrival time of the SSB;
   determining a time of the RO by adding the timing offset value to the arrival time of the SSB and subtracting one or more timing advance (TA) values; and
   performing the transmission of the CFRA preamble during the RO.
2. The method of item 1, wherein the arrival time of the SSB is determined according to a first path arrival timing detected by the UE for the SSB.
3. The method of item 1, wherein the arrival time of the SSB is determined according to a strongest path arrival time detected by the UE for the SSB.
4. The method of item 1, wherein the one or more TA values comprises a value received in a TA command from the base station.
5. The method of item 1, wherein the one or more TA values comprises a value that is based on a spectrum usage mode between the UE and the base station.
6. A method of a user equipment (UE) for performing a transmission of a contention free random access (CFRA) preamble, comprising:
   receiving, from a base station, a physical downlink control channel (PDCCH) comprising an order triggering the transmission of the CFRA preamble and an indication of a synchronization signal block (SSB);
   determining a timing offset value for a random access channel (RACH) occasion (RO) for the transmission of the CFRA preamble relative to a reference signal that is quasi-colocated (QCLed) with the SSB;
   receiving the reference signal;
   determining an arrival time of the reference signal;
   determining a time of the RO by adding the timing offset value to the arrival time of the reference signal and subtracting one or more timing advance (TA) values; and
   performing the transmission of the CFRA preamble during the RO.
7. The method of item 6, wherein the arrival time of the reference signal is determined according to a first path arrival timing detected by the UE for the reference signal.
8. The method of item 6, wherein the arrival time of the reference signal is determined according to a strongest path arrival time detected by the UE for the reference signal.
9. The method of item 6, wherein the reference signal comprises one of a tracking reference signal (TRS), a demodulation reference signal (DMRS), and a channel state information reference signal (CSI-RS).
10. The method of item 6, wherein the one or more TA values comprises a value received in a TA command from the base station.
11. The method of item 6, wherein the one or more TA values comprises a value that is based on a spectrum usage mode between the UE and the base station.
12. A method of a user equipment (UE) for performing a transmission of a contention free random access (CFRA) preamble, comprising:
   receiving, from a base station, a physical downlink control channel (PDCCH) comprising an order triggering the transmission of the CFRA preamble;
   determining a timing offset value for a random access channel (RACH) occasion (RO) for the transmission of the CFRA preamble relative to the PDCCH;
   determining an arrival time of the PDCCH;
   determining a time of the RO by adding the timing offset value to the arrival time of the PDCCH and subtracting one or more timing advance (TA) values; and
   performing the transmission of the CFRA preamble during the RO.
13. The method of item 12, wherein the arrival time of the PDCCH is determined according to the timing used at the UE to receive the PDCCH.
14. The method of item 12, wherein the one or more TA values comprises a value received in a TA command from the base station.
15. The method of item 12, wherein the one or more TA values comprises a value that is based on a spectrum usage mode between the UE and the base station.
16. A method of a user equipment (UE) for performing a transmission of a contention free random access (CFRA) preamble, comprising:
   receiving, from a base station, a physical downlink control channel (PDCCH) order triggering the transmission of the CFRA preamble;
   determining a timing offset value for a random access channel (RACH) occasion (RO) for the transmission of the CFRA preamble relative to a reference signal indicated in an active transmission configuration indicator (TCI) of one of a PDCCH and a physical downlink shared channel (PDSCH) of a current serving cell of the UE;
   receiving the reference signal;
   determining an arrival time of the reference signal;
   determining a time of the RO by adding the timing offset value to the arrival time of the reference signal and subtracting one or more timing advance (TA) values; and
   performing the transmission of the CFRA preamble during the RO.
17. The method of item 16, wherein the reference signal comprises a tracking reference signal (TRS).
18. The method of item 16, wherein the arrival time of the reference signal is determined according to a first path arrival timing detected by the UE for the reference signal.
19. The method of item 16, wherein the arrival time of the reference signal is determined according to a strongest path arrival time detected by the UE for the reference signal.
20. The method of item 16, wherein the one or more TA values comprises a value received in a TA command from the base station.
21. The method of item 16, wherein the one or more TA values comprises a value that is based on a spectrum usage mode between the UE and the base station.
22. A method of a user equipment (UE) for performing a transmission of a contention free random access (CFRA) preamble, comprising:
   receiving, from a base station, a physical downlink control channel (PDCCH) comprising an order triggering the transmission of the CFRA preamble;
   determining a timing offset value for a random access channel (RACH) occasion (RO) for the transmission of the CFRA preamble relative to one of a synchronization signal block (SSB) and a channel state information reference signal (CSI-RS);
   receiving the one of the SSB and the CSI-RS;
   determining an arrival time of the one of the SSB and the CSI-RS;
   determining a time of the RO by adding the timing offset value to the arrival time of the one of the SSB and the CSI-RS and subtracting one or more timing advance (TA) values; and
   performing the transmission of the CFRA preamble during the RO.
23. The method of item 22, wherein the arrival time of the one of the SSB and the CSI-RS is determined according to a first path arrival timing detected by the UE for the one of the SSB and the CSI-RS.
24. The method of item 22, wherein the arrival time of the one of the SSB and the CSI-RS is determined according to a strongest path arrival time detected by the UE for the one of the SSB and the CSI-RS.
25. The method of item 22, wherein the one of the SSB and the CSI-RS comprises an SSB that is used for cell measurement preparatory to a cell access.
26. The method of item 22, wherein the one of the SSB and the CSI-RS comprises a CSI-RS that is used for cell measurement preparatory to a cell access.
27. The method of item 22, wherein the one of the SSB and the CSI-RS comprises an SSB that is used for cell identification preparatory to a cell access.
28. The method of item 22, wherein the one or more TA values comprises a value received in a TA command from the base station.
29. The method of item 22, wherein the one or more TA values comprises a value that is based on a spectrum usage mode between the UE and the base station.
30. A computer program product comprising instructions which, when executed by a processor, implement steps of the method according to any one of item 1 to item 29.
31. An apparatus comprising means to implement steps of the method according to any one of item 1 to item 29.

## Claims

1. A method of a user equipment (UE) for performing a transmission of a contention free random access (CFRA) preamble, comprising:
receiving, from a base station, a physical downlink control channel (PDCCH) order triggering the transmission of the CFRA preamble;
determining a timing offset value for a random access channel (RACH) occasion (RO) for the transmission of the CFRA preamble relative to a reference signal indicated in an active transmission configuration indicator (TCI) of one of a PDCCH and a physical downlink shared channel (PDSCH) of a current serving cell of the UE;
receiving the reference signal;
determining an arrival time of the reference signal;
determining a time of the RO by adding the timing offset value to the arrival time of the reference signal and subtracting one or more timing advance (TA) values; and
performing the transmission of the CFRA preamble during the RO.

2. The method of claim 1, wherein the reference signal comprises a tracking reference signal (TRS).

3. The method of claim 1, wherein the arrival time of the reference signal is determined according to a first path arrival timing detected by the UE for the reference signal or according to a strongest path arrival time detected by the UE for the reference signal.

4. The method of claim 1, wherein the one or more TA values comprises a value received in a TA command from the base station.

5. The method of claim 1, wherein the one or more TA values comprises a value that is based on a spectrum usage mode between the UE and the base station.

6. An apparatus of a user equipment (UE) for performing a transmission of a contention free random access (CFRA) preamble, comprising:
one or more processors, and
a memory storing instructions that, when executed by the one or more processors, configure the UE to:
receive, from a base station, a physical downlink control channel (PDCCH) order triggering the transmission of the CFRA preamble;
determine a timing offset value for a random access channel (RACH) occasion (RO) for the transmission of the CFRA preamble relative to a reference signal indicated in an active transmission configuration indicator (TCI) of one of a PDCCH and a physical downlink shared channel (PDSCH) of a current serving cell of the UE;
receive the reference signal;
determine an arrival time of the reference signal;
determine a time of the RO by adding the timing offset value to the arrival time of the reference signal and subtracting one or more timing advance (TA) values; and
perform the transmission of the CFRA preamble during the RO.

7. The apparatus of claim 6, wherein the reference signal comprises a tracking reference signal (TRS).

8. The apparatus of claim 6, wherein the arrival time of the reference signal is determined according to a first path arrival timing detected by the UE for the reference signal or according to a strongest path arrival time detected by the UE for the reference signal.

9. The apparatus of claim 6, wherein the one or more TA values comprises a value received in a TA command from the base station.

10. The apparatus of claim 6, wherein the one or more TA values comprises a value that is based on a spectrum usage mode between the UE and the base station.

11. A non-transitory computer-readable storage medium including instructions that, when executed by one or more processors of a user equipment (UE) for performing a transmission of a contention free random access (CFRA) preamble, cause the UE to:
receive, from a base station, a physical downlink control channel (PDCCH) order triggering the transmission of the CFRA preamble;
determine a timing offset value for a random access channel (RACH) occasion (RO) for the transmission of the CFRA preamble relative to a reference signal indicated in an active transmission configuration indicator (TCI) of one of a PDCCH and a physical downlink shared channel (PDSCH) of a current serving cell of the UE;
receive the reference signal;
determine an arrival time of the reference signal;
determine a time of the RO by adding the timing offset value to the arrival time of the reference signal and subtracting one or more timing advance (TA) values; and
perform the transmission of the CFRA preamble during the RO.

12. The non-transitory computer-readable storage medium of claim 11, wherein the reference signal comprises a tracking reference signal (TRS).

13. The non-transitory computer-readable storage medium of claim 11, wherein the arrival time of the reference signal is determined according to a first path arrival timing detected by the UE for the reference signal or according to a strongest path arrival time detected by the UE for the reference signal.

14. The non-transitory computer-readable storage medium of claim 11, wherein the one or more TA values comprises a value received in a TA command from the base station.

15. The non-transitory computer-readable storage medium of claim 11, wherein the one or more TA values comprises a value that is based on a spectrum usage mode between the UE and the base station.
